(19) Europäisches Patentamt

European Patent Office

Office européen des brevets

(11) **EP 1 299 628 B1**

(12) **EUROPÄISCHE PATENTSCHRIFT**

(45) Veröffentlichungstag und Bekanntmachung des Hinweises auf die Patenterteilung:
**02.08.2006  Patentblatt 2006/31**

(21) Anmeldenummer: **01951425.6**

(22) Anmeldetag: **25.06.2001**

(51) Int Cl.:
*F02D 33/02* *(2006.01)*

(86) Internationale Anmeldenummer:
**PCT/DE2001/002328**

(87) Internationale Veröffentlichungsnummer:
**WO 2002/004799 (17.01.2002 Gazette 2002/03)**

(54) **VERFAHREN ZUR REGELUNG EINES LADEDRUCKS IN EINER BRENNKRAFTMASCHINE MIT EINEM ABGASTURBOLADER**

METHOD FOR CONTROLLING A CHARGE PRESSURE IN AN INTERNAL COMBUSTION ENGINE WITH AN EXHAUST-GAS TURBOCHARGER

PROCEDE PERMETTANT DE REGULER LA PRESSION D'ADMISSION DANS UN MOTEUR THERMIQUE DOTE D'UN TURBOCOMPRESSEUR A GAZ D'ECHAPPEMENT

(84) Benannte Vertragsstaaten:
**DE FR GB IT**

(30) Priorität: **07.07.2000  DE 10033114**

(43) Veröffentlichungstag der Anmeldung:
**09.04.2003  Patentblatt 2003/15**

(73) Patentinhaber: **SIEMENS AKTIENGESELLSCHAFT**
**80333 München (DE)**

(72) Erfinder:
• **BIRKNER, Christian**
**93173 Irlbach (DE)**
• **NIENHOFF, Michael**
**93053 Regensburg (DE)**
• **OESTREICHER, Wolfgang**
**93047 Regensburg (DE)**
• **STADLER, Wolfgang**
**84061 Ergoldsbach (DE)**

(56) Entgegenhaltungen:
**EP-A- 0 683 308         EP-A- 1 026 378**

• **HACK, LANGKABEL: "Turbo und kompressormotoren: entwicklung, technik, typen." 1999 , MOTOR BUCH VERLAG , STUTTGART XP002182911 Seite 208 -Seite 210 Seite 217 -Seite 218**

**EP 1 299 628 B1**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Regelung eines Ladedrucks in einer Brennkraftmaschine mit einem Abgasturbolader.

Ein Abgasturbolader (ATL) besteht aus zwei Strömungsmaschinen: einer Turbine und einem Verdichter, die auf einer gemeinsamen Welle angebracht sind. Die Turbine nutzt die im Abgas enthaltene Energie zum Antrieb des Verdichters, der Frischluft ansaugt und vorverdichtete Luft in die Zylinder einer Brennkraftmaschine drückt. Der Abgasturbolader ist durch den Luft- und Abgasmassenstrom strömungstechnisch mit der Brennkraftmaschine gekoppelt. Abgasturbolader werden bei Pkw-, Lkw- und Großbrennkraftmaschinen eingesetzt. Insbesondere bei Pkw-Abgasturboladern ist wegen des großen Drehzahlbereichs eine Regelung des Abgasturboladers erforderlich, um einen nahezu konstanten und genauen Ladedruck in einem weiteren Drehzahlbereich zu erzielen.

Um einen bestimmten Soll-Ladedruck bereitzustellen, sind Regel- und Steuervorrichtungen bekannt. Dabei muß berücksichtigt werden, daß der am Abgasturbolader erzeugte Ladedruck in der Regel vom Betriebspunkt der Brennkraftmaschine abhängt. Eine Möglichkeit, den Ladedruck eines Abgasturboladers zu beeinflussen, bieten Abgasturbolader mit variabler Turbinengeometrie (VTG). Die Steuerung des Ladedrucks mit Hilfe der variablen Turbinengeometrie erfolgt durch einen VTG-Steller, der unter Vorgabe einer Stellgröße angesteuert wird. Zur Ladedruckregelung ist es ebenfalls möglich, ein abgasseitig angeordnetes Ladedruckregelventil (WASTEGATE) zu verwenden. Bei dieser abgasseitigen Regelung wird ein Teil der Abgase um die Turbine herumgeführt, so daß abhängig von dem herumgeführten Abgasstrom ein geringerer Abgasstrom durch die Turbine strömt.

Aus DE 197 09 955 A1 ist ein Verfahren zum Steuern einer Brennkraftmaschine bekannt, das mit einer Steuereinrichtung versehen ist, die physikalische Modelle einer Aufladeeinrichtung und eines Ansaugtrakts aufweist. Mit Hilfe dieser Modelle werden Schätzwerte für den Ladedruck und für den Luftmassenstrom in die Zylinder ermittelt, die zur Steuerung der Brennkraftmaschine dienen.

Aus der DE 42 14 648 A1 ist ein Verfahren zum Steuern einer Brennkraftmaschine mit einem Turbolader und eine Abgasrückführung bekannt, bei dem durch Integration der Differenz zwischen den Leistungen des Verdichters und der Turbine des Turboladers die Drehzahl der Laderwelle bestimmt wird. Ausgehend von der Drehzahl der Laderwelle wird dann ein Ladedrucksignal berechnet. Das Ladedrucksignal wird dann zusammen mit weiteren Signalen zur Steuerung der Brennkraftmaschine verwendet.

Der Erfindung liegt die Aufgabe zugrunde, ein Verfahren zur Regelung des Ladedrucks bereitzustellen, das mit einfachen Mitteln eine genaue und zuverlässige Einstellung des Ladedrucks ermöglicht.

Die Aufgabe wird durch die Merkmale des Hauptanspruchs gelöst.

Erfindungsgemäß wird in dem Verfahren in einem ersten Schritt die Leistung oder das Drehmoment des Verdichters bestimmt. Leistung und Drehmoment des Verdichters sind über die Turboladerdrehzahl miteinander verknüpft, wobei das Drehmoment umgekehrt proportional zur Turboladerdrehzahl und proportional zur Leistung des Verdichters ist. Erfindungsgemäß werden in einem zweiten Schritt die bei der Übertragung von der Turbine auf den Verdichter auftretenden Leistungs- oder Drehmomentverluste bestimmt. Hierbei werden insbesondere Spaltverluste, Reibungsverluste der Welle usw. berücksichtigt. Zur Ermittlung der Verlustleistung bzw. des Verlustdrehmoments wird angenommen, daß die Verluste abhängig von der Leistung bzw. dem Drehmoment des Verdichters sind. Der Proportionalitätsfaktor ist abhängig von dem Betriebszustand und wird mit Hilfe einer Kennlinie bestimmt. In einem dritten Schritt wird aus den zuvor bestimmten Leistungen und Drehmomenten die Leistung bzw. das Drehmoment der Turbine bestimmt. Dieses ergibt sich direkt als Summe der beiden zuvor bestimmten physikalischen Größen. Abhängig von der Leistung oder dem Drehmoment der Turbine wird nun nachfolgend eine Sollwertvorgabe für die Stellgröße zur Einstellung des Ladedrucks ermittelt. Hierbei ist vorteilhaft, daß nicht nur die Parameter, die die Betriebszustände des Motors kennzeichnen, sondern auch die Zustände der Turbine berücksichtigt werden. Bei dem erfindungsgemäßen Verfahren wird der eindeutige thermodynamische Zustand der Turbine beschrieben. Dies ermöglicht eine schnelle und sehr genaue Einstellung bzw. Regelung des Ladedrucks bei einer Brennkraftmaschine mit ATL.

In einer bevorzugten Ausgestaltung des Verfahrens wird die Leistung oder das Drehmoment des Verdichters unter Verwendung des isentropen Verdichterwirkungsgrades bestimmt, wobei der isentrope Verdichterwirkungsgrad durch ein erstes Kennfeld abhängig von dem Druck nach dem Verdichter und dem Frischluftmassenstrom sowie dem Umgebungsdruck und der Umgebungstemperatur bestimmt wird. Der isentrope Verdichterwirkungsgrad ist als ein erstes Kennfeld abhängig von dem Druckverhältnis zwischen Druck nach dem Verdichter und dem Umgebungsdruck und dem Quotienten aus Frischluftmassenstrom und Umgebungsdruck multipliziert mit der Wurzel aus der Umgebungstemperatur abgelegt.

Sofern an dem Abgasturbolader keine Meßeinrichtung zur Messung der Turbinendrehzahl vorgesehen ist, wird der Wert der Turbinendrehzahl durch ein zweites Kennfeld abhängig von dem Massenstrom über den Verdichter, dem Abgasdruck nach dem Verdichter, Umgebungsdruck und der Abgastemperatur berechnet.

Zu einer genaueren Berechnung der Turbinendrehzahl, insbesondere bei einer variablen Turbinengeometrie kann das zweite Kennfeld zusätzlich von dem Wert der Stellgröße für den Ladedruck abhängen. Ebenfalls ist es möglich, daß die Turbinendrehzahl direkt an der Turbine gemessen wird. Bevorzugt erfolgt hier eine kontaktlose Messung der Turbinendrehzahl, wie beispielsweise eine induktive oder optische Messung.

Der Leistungs- oder der Drehmomentverlust wird abhängig von der Turbinendrehzahl über eine vorbestimmte Kennlinie ermittelt. Zur Ermittlung des Verlustes werden die nicht durch den isentropen Wirkungsgrad des Verdichters erfaßten Verluste in der Kennlinie berücksichtigt. Hierzu werden die Verluste abhängig von der Turbinendrehzahl dargestellt. Bevorzugt ist die Kennlinie nicht direkt abhängig von der Turbinendrehzahl dargestellt, sondern abhängig von der Turbinendrehzahl normiert auf die maximale Turbinendrehzahl.

In einer Weiterführung des Verfahrens wird die Stellgröße abhängig von dem Druckverhältnis der Turbine ermittelt, das über eine polytrope Beziehung abhängig vom isentropen Wirkungsgrad der Turbine berechnet wird, wobei der isentrope Wirkungsgrad der Turbine unter Verwendung eines dritten Kennfeldes abhängig von dem Massenstrom über die Turbine, der Abgastemperatur und dem Abgasdruck vor der Turbine ermittelt wird. Zusätzlich wird bei dem dritten Kennfeld der Wert der Stellgröße für den Ladedruck berücksichtigt. Die Stellgröße selber wird über ein viertes Kennfeld abhängig von dem Abgasmassenstrom, dem Abgasdruck vor der Turbine und der Abgastemperatur, sowie dem Turbinendruckverhältnis ermittelt, wobei das Turbinendruckverhältnis wiederum von dem berechneten isentropen Wirkungsgrad der Turbine abhängt. Entscheidend ist hierbei, daß das vierte Kennfeld vom Turbinendruckverhältnis abhängt, was die Verwendung von bereits bekannten und zusammengestellten Turbinenkennfeldern vereinfacht.

Alternativ hierzu ist es auch möglich, daß die Stellgröße durch ein Kennfeld abhängig von dem Temperaturverhältnis an der Turbine bestimmt wird, wobei dann die Größen des Abgasmassenstroms, des Abgasdrucks vor der Turbine und der Abgastemperatur berücksichtigt werden. Bei dieser Bestimmung der Stellgröße ist das Kennfeld abhängig von dem Temperaturverhältnis an der Turbine, wodurch einerseits eine Berechnung des isentropen Wirkungsgrades der Turbine unterbleiben kann, andererseits jedoch das vierte Kennfeld temperaturabhängig aufgestellt werden muß.

Mit dem erfindungsgemäßen Verfahren wird der Ladedruck über eine Turbine mit einer variablen Turbinengeometrie oder über ein WASTEGATE mit einem Ventil eingestellt.

Bei der Verwendung eines WASTEGATEs wird der über das WASTEGATE fließende Massenstrom als die Differenz aus Abgasmassenstrom und einem maximalen Turbinenmassenstrom gebildet, um die Turbine zu schützen.

Ausführungsbeispiele der Erfindung werden im folgenden unter Bezugnahme auf die Zeichnungen näher erläutert. Es zeigen:

Fig. 1    einen schematischen Aufbau der Reglerstruktur,
Fig. 2    drei Funktionsblöcke für das Modell des Turboladers,
Fig. 3    die Bestimmung der Leistung des Verdichters einmal abhängig von den Drücken und einmal abhängig von der Temperatur,
Fig. 4    die Bestimmung von Sollwerten für das Temperaturverhältnis,
Fig. 5    die Berechnung der Turbinenleistung,
Fig. 6    die Berechnung des Turbinendrehmoments für den Fall, daß die Turbinendrehzahl gemessen wird,
Fig. 7    die Berechnung des Tastverhältnisses für das Stellglied, wenn das Temperaturverhältnis verwendet wird, und
Fig. 8    die Berechnung des Tastverhältnisses, wenn das Druckverhältnis an der Turbine der Berechnung des Tastverhältnisses zugrunde gelegt wird.

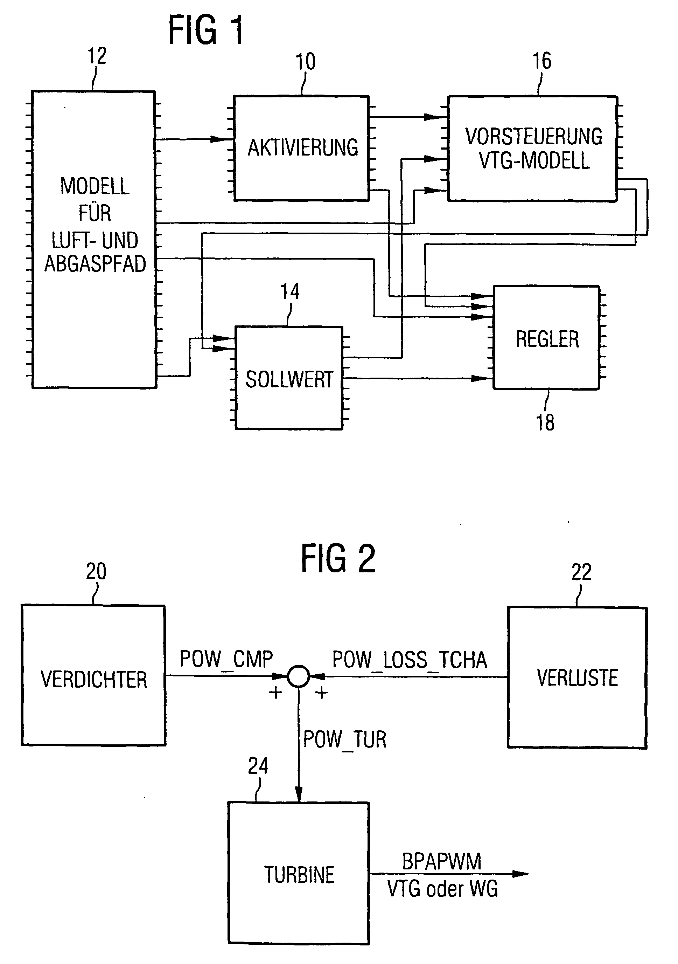

Der in Fig. 1 dargestellte schematische Aufbau der Regelung besitzt eine Aktivierungseinheit 10, die abhängig von den Betriebspunkten der Brennkraftmaschine entweder in einen geregelten (closed-loop) oder gesteuerten (open-loop) Betrieb schalten. Die Aktivierungsbedingungen sind abhängig von den Betriebspunkten der Brennkraftmaschine, die entweder über eine Messung oder in dem Modell des Luft-Abgaspfades 12 ermittelt werden.

Die Sollwerteinheit 14 bestimmt Sollwerte, die abhängig von den Betriebsparametern der Brennkraftmaschine, des Turboladers, den Umgebungsbedingungen und den berechneten Größen aus dem Modell 12 sind. Diese Sollwerte werden zusätzlich noch dynamisch korrigiert, um eine optimale Anpassung des Sollwertes an instationäre Betriebszustände zu erreichen. Die Sollwerte werden an eine Vorsteuereinheit 16 und an einen Regler 18 weitergeleitet. Die Vorsteuereinheit 16 kann beispielsweise ein VTG-Modell enthalten, um die variable Turbinengeometrie gemäß den vorgegebenen Sollwerten anzusteuern.

In der Modelleinheit 12 für den Luft- und Abgaspfad werden die nicht gemessenen Zustände im Luft-Abgaspfad ermittelt und den übrigen Einheiten 10, 14, 16 und 18 zur Verfügung gestellt. Der Regler kann als ein konventioneller PI-Regler ausgebildet sein, der vorzugsweise einen parallelen Korrekturzweig mit $DT_1$-Verhalten besitzt. Mit dem Regler werden Ungenauigkeiten der Vorsteuerung und der Modelleinheit 12 für den Luft- und Abgaspfad kompensiert.

Die Modellstruktur wird mit Bezug auf Fig. 2 am Beispiel der Leistungsbilanz näher beschrieben. In einem Verdichter-Modellelement 20 wird die Leistung des Verdichters über die thermodynamischen Zustände am Verdichter berechnet. Um diese Leistung des Verdichters (POW_CMP) in die Leistung der Turbine (POW_TUR) umrechnen zu können, wird in einem Verlust-Modellelement 22 die an der Welle zwischen Verdichter und Turbine auftretenden Verluste berechnet. Die Summe aus Verdichterleistung und Verlustleistung ergibt die Turbinenleistung (POW_TUR), die als Eingangsgröße an das Turbinen-Modellelement 24 anliegt. Das Turbinen-Modellelement bestimmt das Tastverhältnis (BPAPWM) für die variable Turbinengeometrie (VTG) oder das WASTEGATE (WG). Aus dem Vorstehenden wird deutlich, daß dieselbe Betrachtungsweise für die an der Welle angreifenden Drehmomente gilt.

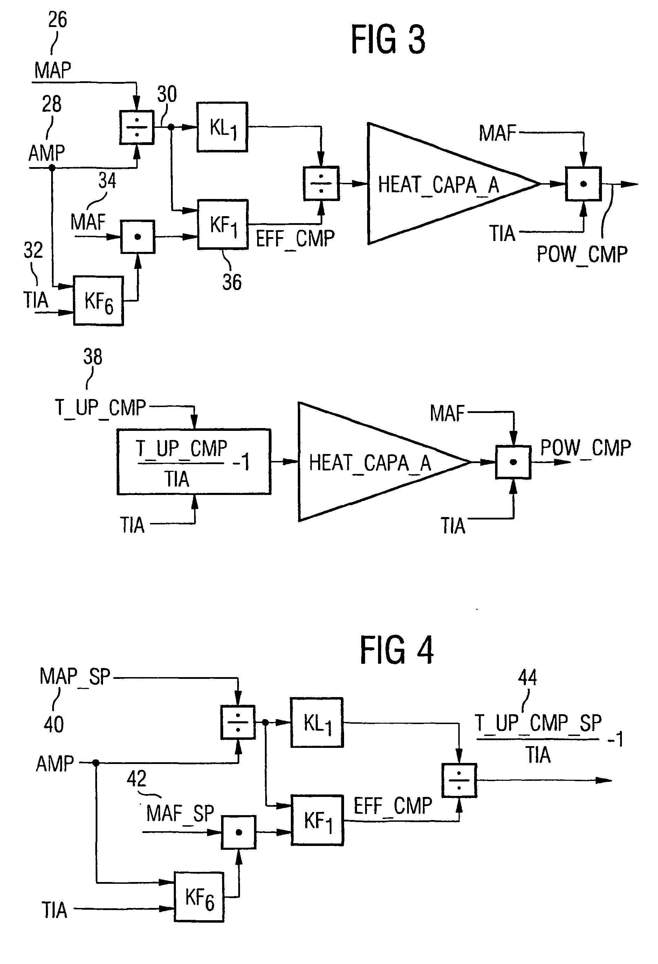

Nachfolgend werden die einzelnen Modellelemente im Detail erläutert. Fig. 3 zeigt die Berechnung der Verdichterleistung (POW_CMP). In die Verdichterleistung geht ein der Quotient aus Umgebungsdruck (AMP) 28 und Druck am Verdichter (MAP) 26, deren Quotient 30 an einer Kennlinie $KL_1$ anliegt. Die Kennlinie $KL_1$ berechnet die folgende Größe:

$$KL_1 = f(MAP, AMP) = \left(\frac{AMP}{MAP}\right)^{\frac{CAPA\_MAF-1}{CAPA\_MAF}} - 1$$

wobei CAPA_MAF den isentropen Exponenten von Luft bezeichnet.

Zusätzlich zu dem Umgebungsdruck (AMP) 28 wird in dem Kennfeld $KF_1$ noch der Frischluftmassenstrom (MAF) 34 und die Umgebungstemperatur (TIA) 32 berücksichtigt. In dem Kennfeld $KF_1$ 36 wird der isentrope Verdichter-Wirkungsgrad (EFF_CMP) bestimmt. Unter Berücksichtigung des Frischluftmassenstroms und der Umgebungstemperatur sowie der spezifischen Wärmekapazität von Luft läßt sich so die Leistung des Verdichters berechnen. Soll statt der Leistungsbilanz in Fig. 2 die Drehmomentbilanz betrachtet werden, so ist die in Fig. 3 berechnete Leistung des Verdichters durch die Turbodrehzahl (N_TCHA) und den Faktor $2\pi$ zu dividieren. Bei einem vorhandenen Sollwert der Temperatur nach dem Verdichter (T_UP_CMP) 38 ist auch eine Sollwertvorgabe über das Temperaturverhältnis am Verdichter möglich.

Fig. 4 verdeutlicht, daß das mit Bezug auf Fig. 3 erläuterte Verdichtermodell ebenfalls dazu verwendet werden kann, um aus einem Sollwert für den Druck am Verdichter (MAP_SP) 40 und aus einem Sollwert für den Frischluftmassenstrom (MAF_SP) 42 den Sollwert für die Temperatur nach dem Verdichter (T_UP_CMP_SP) 44 zu berechnen.

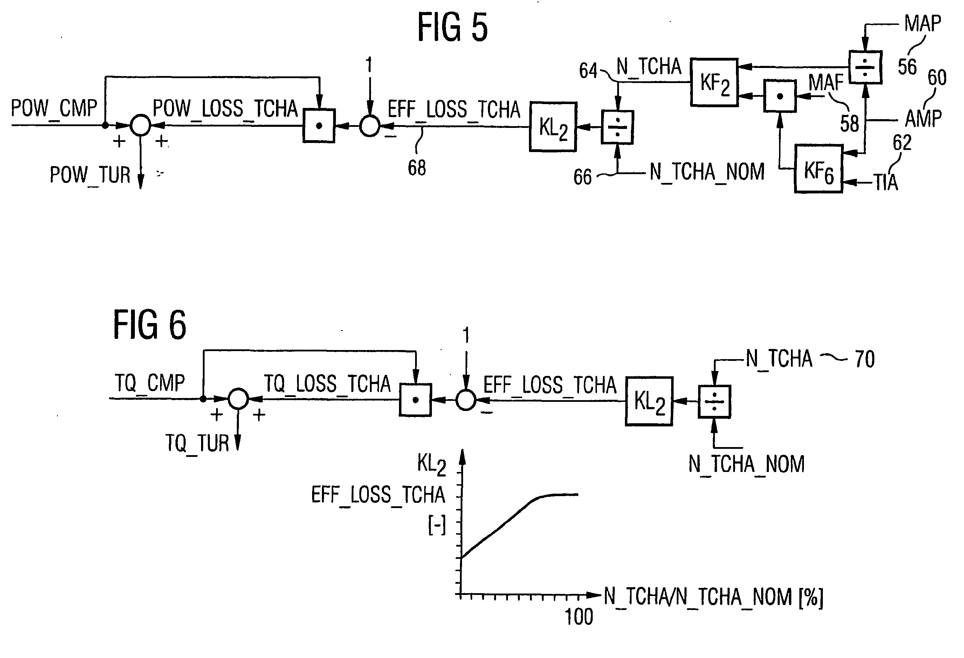

Die beiden Möglichkeiten zur Berechnung der Verluste werden mit Bezug auf die Figuren 5 und 6 beschrieben. Fig. 5 zeigt am Beispiel der Leistungsbilanz die Berechnung der Verlustleistung, wenn keine Messung der Turbinendrehzahl erfolgt. In diesem Fall wird mit Hilfe des Kennfeldes $KF_2$ abhängig von dem Druck am Verdichter (MAP) 56, dem Frischluftmassenstrom (MAF) 58, dem Umgebungsdruck (AMP) 60 und der Umgebungstemperatur (TIA) 62 die Turbinendrehzahl (N_TCHA) 64 bestimmt. Bezogen auf eine normierte Turbinendrehzahl (N_TCHA_NOM) 66 kann über die Kennlinie $KL_2$ der nicht isentrope Verlust des Turboladers (EFF_LOSS_TCHA) 68 berechnet werden. Die Verlustleistung des Abgasturboladers ergibt sich damit zu:

$$POW\_LOSS\_TCHA = (1-EFF\_LOSS\_TCHA)\ POW\_CMP$$

Fig. 6 erläutert die Berechnung des Turbinendrehmoments für den Fall, daß die gemessene Turbinendrehzahl (N_TCHA) 70 bekannt ist. Im Vergleich zu der mit Bezug auf Fig. 5 beschriebenen Berechnung kann hierbei direkt die geeignet normierte Turbinendrehzahl mit dem Kennfeld $KL_2$ benutzt werden. Ein beispielhafter Verlauf für ein solches Kennfeld ist im unteren Teil der Fig. 6 wiedergegeben. Es ist dargestellt, daß die nicht isentropen Verluste des Turboladers mit der normierten Turbinendrehzahl (N_TCHA/N_TCHA_NOM) steigen.

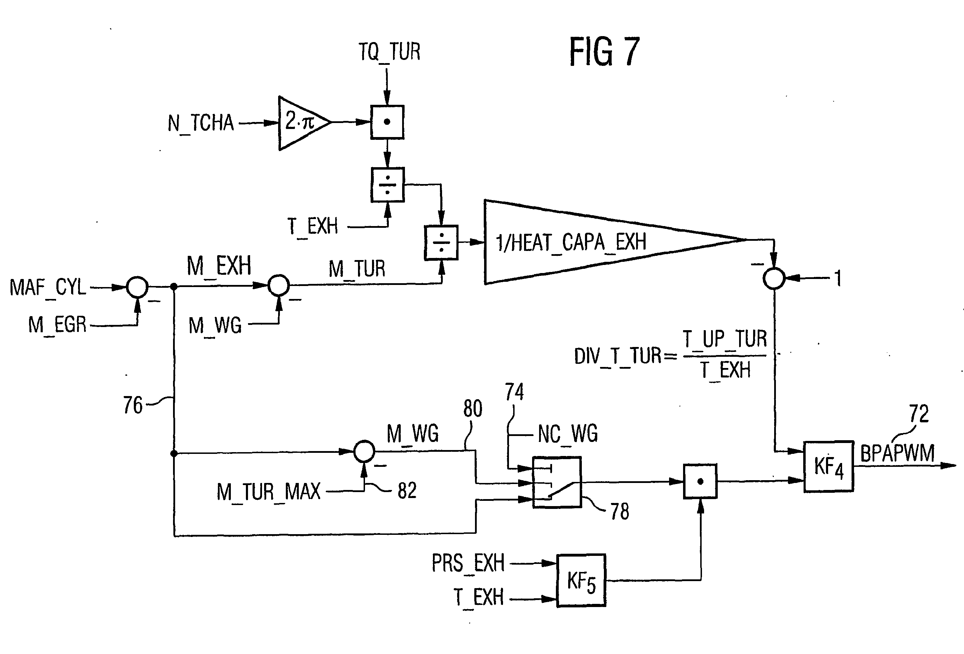

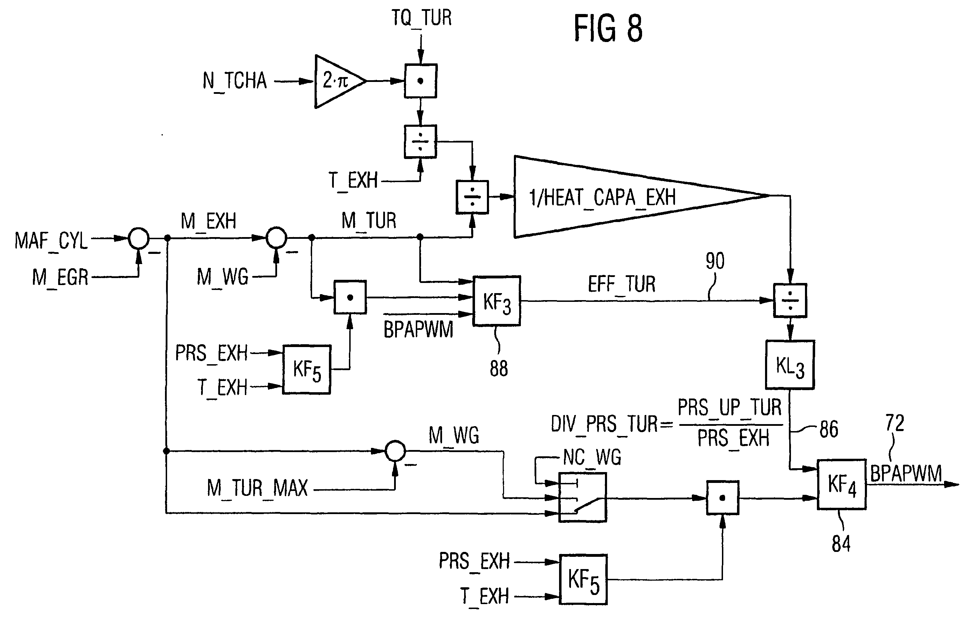

Die Figuren 7 und 8 erläutern die Berechnung des Tastverhältnisses (BPAPWM) 72 für das Stellglied. Beide Figuren erläutern die Berechnung der Stellgröße anhand des Turbinendrehmoments (TQ_TUR) 74. Jedoch kann die gleiche Berechnung auch ausgehend von der Turbinenleistung (POW_TUR) 74 ausgeführt werden. In der in Fig. 7 dargestellten Berechnung wird die Stellgröße 72 (BPAPWM) abhängig von dem Temperaturverhältnis (DIV_T_TUR = T_UP_TDR/T_EXH) berechnet. Das vierte Kennfeld $KF_4$ hat die folgenden Abhängigkeiten:

$$KF_4 = BPAPWM = f\left(\frac{T\_UP\_TUR}{T\_EXH}; M\_EXH \cdot \frac{\sqrt{T\_EXH}}{PRS\_EXH}\right)$$

wobei T_UP_TUR die Temperatur nach der Turbine, T_EXH die Abgastemperatur, M_EXH den Abgasmassenstrom über die Turbine und PRS_EXH den Abgasdruck vor der Turbine bezeichnet.

Abhängig von dem Druckverhältnis (DIV_PRS_TUR = PRS_UP_TUR/PRS_EXH) hat das vierte Kennfeld die folgende Gestalt:

$$KF_4 = BPAPWM = f\left(\frac{PRS\_UP\_TUR}{PRS\_EXH}, M\_EXH \cdot \frac{\sqrt{T\_EXH}}{PRS\_EXH}\right)$$

Das in Fig. 7 dargestellte Modell ermöglicht eine besonders einfache Umschaltung für eine WASTEGATE-Steuerung. Ansprechend auf ein Steuersignal (NC_WG) wird zwischen zwei Zuständen hin und her geschaltet. Bei der in Fig. 7 dargestellten Verbindung erfolgt eine VTG-Steuerung, bei der der Abgasmassenstrom über die Turbine (M_ EXH) 76 verwendet wird. Bei einer WASTEGATE-Steuerung wird ansprechend auf das Steuersignal 74 der Kontakt mit dem Anschluß 78 hergestellt, so daß der Massenstrom über das WASTEGATE 80 (M_WG) an die Stelle des Abgasstroms über die Turbine tritt. Der Massenstrom über das WASTEGATE ergibt sich als der Massenstrom über die Turbine minus einem maximalen Massenstrom über die Turbine (M_TUR_MAX) 82. Die Verwendung des maximalen Massenstroms über die Turbine 82 ermöglicht es, die Turbine vor einer Zerstörung durch einen zu großen Massenstrom zu schützen.
Fig. 8 zeigt die Berechnung der Stellgröße 72 abhängig von einem Kennfeld $KF_4$ 84, das von dem Druckverhältnis (DIV_PRS_TUR) 86 an der Turbine abhängt. Zur Bestimmung des Druckverhältnisses 86 wird mit Hilfe des dritten Kennfeldes ($KF_3$) 88 der isentrope Turbinenwirkungsgrad 90 berechnet. Dieser kann über die Kennlinie $KL_3$ (polytropen Beziehung zwischen Temperatur- und Druckverhältnis) in das Druckverhältnis wie folgt umgerechnet werden:

$$KL_3 = f(EFF\_TUR; T\_TUR; T\_EXH) = \left(1 - \left[\underbrace{\frac{1}{EFF\_TUR} \cdot \left(1 - \frac{T\_UP\_TUR}{T\_EXH}\right)}_{EINGANG}\right]\right)^{\frac{CAPA\_EXH}{CAPA\_EXH-1}}$$

Die Werte für den Abgasdruck vor der Turbine (PRS_EXH) und die Abgastemperatur (T_EXH) sowie den Massenstrom über EGR werden in dem Modell aus Fig. 8 geschätzt. Es hat sich herausgestellt, daß die Sensitivität des Modells auf die Stellgröße 72 (BPAPWM), die einerseits Ergebnis des Modells ist, andererseits in dem dritten Kennfeld ($KF_3$) 88 eingeht, gering ist, so daß stabile und genaue Ergebnisse erzielt werden. Alternativ zur Stellgröße 72 (Tastverhältnis) am dritten Kennfeld kann auch eine Lagerückmeldung des Wastegates oder der VTG-Stellung an dem Kennfeld verwendet werden.

**Patentansprüche**

1. Verfahren zur Regelung eines Ladedrucks in einer Brennkraftmaschine mit einem Abgasturbolader bestehend aus einer Turbine und einem Ladeluftverdichter, bei dem eine Stellgröße zum Einstellen des vom Ladeluftverdichter abgegebenen Ladedrucks bestimmt wird, das folgende Verfahrensschritte aufweist:

   - in einem ersten Schritt wird die Leistung oder das Drehmoment des Verdichters (POW_CMP, TQ_CMP) bestimmt,
   - in einem zweiten Schritt wird der bei der Übertragung von der Turbine auf den Verdichter auftretende Leistungs- oder Drehmomentverlust (POW_LOSS_TCHA, TQ_LOSS_TCHA) bestimmt und
   - in einem dritten Schritt wird die Leistung oder das Drehmoment der Turbine (POW_TUR, TQ_TUR) aus der Leistung oder dem Drehmoment des Verdichters und dem Leistungs- oder Drehmomentverlust bestimmt und abhängig von der Leistung oder dem Drehmoment der Turbine eine Sollwertvorgabe für die Stellgröße (BPAPWM) ermittelt.

2. Verfahren nach Anspruch 1, **dadurch gekennzeichnet, daß** die Leistung oder das Drehmoment des Verdichters unter Verwendung eines isentropen Verdichterwirkungsgrades (EFF_CMP) bestimmt wird, wobei der isentrope Verdichterwirkungsgrad über ein erstes Kennfeld ($KF_1$) abhängig von den folgenden Größen bestimmt wird:

Druck nach dem Verdichter (MAP),
der Brennkraftmaschine zugeführter Frischluftmassenstrom (MAF),
Umgebungsdruck (AMP) und
Umgebungstemperatur (TIA).

**3.** Verfahren nach Anspruch 1 oder 2, **dadurch gekennzeichnet, daß** die Turbinendrehzahl (N_TCHA) berechnet wird, wobei der Wert der Turbinendrehzahl durch ein zweites Kennfeld ($KF_2$) abhängig von den folgenden Größen berechnet wird:

Massenstrom über dem Verdichter (MAF),
Abgasdruck nach dem Verdichter, Umgebungsdruck (AMP) und
Umgebungstemperatur (TIA).

**4.** Verfahren nach Anspruch 3, **dadurch gekennzeichnet, daß** das zweite Kennfeld ($KF_2$) zusätzlich von dem Wert der Stellgröße (BPAPWH) für den Ladedruck abhängt.

**5.** Verfahren nach Anspruch 1 oder 2, **dadurch gekennzeichnet, daß** die Turbinendrehzahl (N_TCHA) gemessen wird.

**6.** Verfahren nach einem der Ansprüche 3 bis 5, **dadurch gekennzeichnet, daß** der Leistungs- oder der Drehmomentverlust abhängig von der Turbinendrehzahl (N_TCHA) mittels einer vorbestimmten Kennlinie ermittelt wird.

**7.** Verfahren nach einem der Ansprüche 1 bis 6, **dadurch gekennzeichnet, daß** die Stellgröße (BPAPWH) für den Ladedruck abhängig vom isentropen Wirkungsgrad der Turbine ermittelt wird und der isentrope Wirkungsgrad der Turbine (EFF_TUR) unter Verwendung eines dritten Kennfeldes ($KP_3$) abhängig von den folgenden Größen bestimmt wird:

- Massenstrom über die Turbine (M_TUR),
- Abgastemperatur (T_EXH) und
- Abgasdruck vor der Turbine (PRS_EXH),
- wobei das dritte Kennfeld ($KF_3$) zusätzlich von dem Wert der Stellgröße (BPAPWH) für den Ladedruck abhängt.

**8.** Verfahren nach Anspruch 7, **dadurch gekennzeichnet, daß** die Stellgröße (BPAPWH) für den Ladedruck durch ein viertes Kennfeld ($KF_4$) abhängig von den folgenden Größen berechnet wird:

- Abgasmassenstrom (M_EXH),
- Abgasdruck vor der Turbine (PRS_EXH) und
- Abgastemperatur (T_EXH),

sowie einem Turbinendruckverhältnis (DIV_PRS_TUR), das von dem ermittelten isentropen Wirkungsgrad der Turbine abhängt.

**9.** Verfahren nach einem der Ansprüche 1 bis 6, **dadurch gekennzeichnet, daß** die Stellgröße (BPAPWH) für den Ladedruck über ein Kennfeld (KF4) abhängig von dem Temperaturverhältnis an der Turbine (DIV_T_TUR) und den folgenden Größen bestimmt wird:

- Abgasmassenstrom (M_EXH),
- Abgasdruck vor der Turbine (PRS_EXH) und
- Abgastemperatur (T_EXH).

**10.** Verfahren nach einem der Ansprüche 1 bis 9, **dadurch gekennzeichnet, daß** die Stellgröße (BPAPWH) für den Ladedruck auf eine variable Turbinengeometrie einwirkt.

**11.** Verfahren nach einem der Ansprüche 1 bis 9, **dadurch gekennzeichnet, daß** die Stellgröße (BPAPWH) für den Ladedruck auf ein abgasseitig angeordnetes Ladedruckventil (WASTEGATE) einwirkt.

**12.** Verfahren nach Anspruch 11, **dadurch gekennzeichnet, daß** der Massenstrom über das Ladedruckventil (M_WG) sich als die Differenz zwischen Abgasmassenstrom (M_EXH) und einem maximalen Turbinenmassenstrom (M_TUR_MAX) ergibt.

**Claims**

1. Method for controlling a charge pressure in an internal combustion engine with an exhaust gas turbocharger consisting of a turbine and a charge air compressor in which a manipulated variable is determined for setting the charge pressure which is emitted by the charge air compressor and has the following method steps:

   - in a first step the power or the torque of the compressor (POW_CMP, TQ_CMP) is determined,
   - in a second step, the power or torque loss (POW_LOSS_TCHA, TQ_LOSS_TCHA) which occurs during the transmission from the turbine to the compressor is determined, and
   - in a third step the power or the torque of the turbine (POW_TUR, TQ_TUR) is determined from the power or the torque of the compressor and the power or torque loss, and a predefined setpoint value is determined for the manipulated variable (BPAPWM) as a function of the power or the torque of the turbine.

2. Method according to Claim 1, **characterized in that** the power or the torque of the compressor is determined using an isentropic compressor efficiency level (EFF_CMP),
   the isentropic compressor efficiency level being determined by means of a first characteristic diagram (KF$_1$) as a function of the following variables:

   pressure downstream of the compressor (MAP),
   fresh air mass flow rate (MAF) fed to the internal combustion engine,
   ambient pressure (AMP) and
   ambient temperature (TIA).

3. Method according to Claim 1 or 2, **characterized in that** the rotational speed (N_TCHA) of the turbine is calculated,
   the value of the rotational speed of the turbine being calculated by means of a second characteristic diagram (KF$_2$) as a function of the following variables,
   mass flow rate across the compressor (MAF),
   exhaust gas pressure downstream of the compressor, ambient pressure (AMP), and
   ambient temperature (TIA).

4. Method according to Claim 3, **characterized in that** the second characteristic diagram (KF$_2$) additionally depends on the value of the manipulated variable (BPAPWH) for the charge pressure.

5. Method according to Claim 1 or 2, **characterized in that** the rotational speed (N_TCHA) of the turbine is measured.

6. Method according to one of Claims 3 to 5, **characterized in that** the power or torque loss is determined as a function of the rotational speed (N_TCHA) of the turbine by means of a predetermined characteristic curve.

7. Method according to one of Claims 1 to 6, **characterized in that** the manipulated variable (BPAPWH) for the charge pressure is determined as a function of the isentropic efficiency level of the turbine, and the isentropic efficiency level of the turbine (EFF_TUR) is determined using a third characteristic diagram (KF$_3$) as a function of the following variables:

   - mass flow rate across the turbine (M_TUR),
   - exhaust gas temperature (T_EXH) and
   - exhaust gas pressure upstream of the turbine (PRS_EXH),
   - the third characteristic diagram (KF$_3$) depending additionally on the value of the manipulated variable (BPAPWH) for the charge pressure.

8. Method according to Claim 7, **characterized in that** the manipulated variable (BPAPWH) for the charge pressure is calculated by a fourth characteristic diagram (KF$_4$) as a function of the following variables:

   - exhaust gas mass flow rate (M_EXH),
   - exhaust gas pressure upstream of the turbine (PRS_EXH) and
   - exhaust gas temperature (T_EXH),

   and a turbine pressure ratio (DIV_PRS_TUR) which depends on the isentropic efficiency level of the turbine which is determined.

9. Method according to one of Claims 1 to 6, **characterized in that** the manipulated variable (BPAPWH) for the charge pressure is determined by means of a characteristic diagram (KF4) as a function of the temperature ratio at the turbine (DIV_T_TUR) and the following variables:

- exhaust gas mass flow rate (M_EXH),
- exhaust gas pressure upstream of the turbine (PRS_EXH) and
- exhaust gas temperature (T_EXH).

10. Method according to one Claims 1 to 9, **characterized in that** the manipulated variable (BPAPWH) for the charge pressure acts on a variable turbine geometry.

11. Method according to one of Claims 1 to 9, **characterized in that** the manipulated variable (BPAPWH) for the charge pressure acts on a charge pressure valve (WASTEGATE) which is arranged at the exhaust gas end.

12. Method according to Claim 11, **characterized in that** the mass flow rate across the charge pressure valve (M_WG) is obtained as the difference between the exhaust gas mass flow rate (M_EXH) and a maximum turbine mass flow rate (M_TUR_MAX).

**Revendications**

1. Procédé pour régler la pression de suralimentation dans un moteur à combustion interne comprenant un turbocompresseur à gaz d'échappement constitué d'une turbine et d'un compresseur d'air de suralimentation, procédé dans lequel une valeur de réglage pour ajuster la pression de suralimentation fournie par le compresseur d'air de suralimentation est déterminée, et qui comprend les étapes suivantes :

- dans une première étape, la puissance ou le couple du compresseur (POW_CMP, TQ_CMP) est déterminé,
- dans une deuxième étape, la perte de puissance ou de couple (POW_LOSS_TCHA, TQ_LOSS_TCHA) se produisant lors de la transmission depuis la turbine au compresseur, est déterminée, et,
- dans une troisième étape, la puissance ou le couple de la turbine (POW_TUR, TQ_TUR) est déterminé à partir de la puissance ou du couple du compresseur et de la perte de puissance ou de couple, et une valeur de consigne de la valeur de réglage (BPAPWM) est établie.

2. Procédé selon la revendication 1, **caractérisé en ce que** la puissance ou le couple du compresseur est déterminé en utilisant un rendement isentropique du compresseur (EFF_CMP),
le rendement isentropique du compresseur étant déterminé à l'aide d'un premier champ caractéristique $KF_1$ en fonction des grandeurs suivantes :

- la pression en aval du compresseur (MAP),
- le débit massique d'air frais (MAF) amené au moteur à combustion interne,
- la pression ambiante (AMP), et
- la température ambiante (TIA).

3. Procédé selon la revendication 1 ou 2, **caractérisé en ce que** le nombre de tours de la turbine (N_TCHA) est calculé, la valeur du nombre de tours de la turbine étant calculée à l'aide d'un deuxième champ caractéristique ($KF_2$) en fonction des grandeurs suivantes :

- le débit massique sur le compresseur (MAF),
- la pression des gaz d'échappement en aval du compresseur, pression ambiante (AMP), et
- la température ambiante (TIA).

4. Procédé selon la revendication 3, **caractérisé en ce que** le deuxième champ caractéristique ($KF_2$) dépend en plus de la valeur de réglage (BPAPWH) de la pression de suralimentation.

5. Procédé selon la revendication 1 ou 2, **caractérisé en ce que** le nombre de tours de la turbine (N_TCHA) est mesuré.

6. Procédé selon l'une des revendications 3 à 5, **caractérisé en ce que** la perte de puissance ou de couple est déterminée en fonction du nombre de tours de la turbine (N_TCHA) à l'aide d'une ligne caractéristique prédéterminée.

**7.** Procédé selon l'une des revendications 1 à 6, **caractérisé en ce que** la valeur de réglage (BPAPWH) de la pression de suralimentation est déterminée en fonction du rendement isentropique de la turbine, et que le rendement isentropique de la turbine (EFF_TUR) est déterminé à l'aide d'un troisième champ caractéristique $KF_3$) en fonction des grandeurs suivantes :

- le débit massique sur la turbine (M_TUR),
- la température des gaz d'échappement (T_EXH), et
- la pression des gaz d'échappement en amont de la turbine (PRS_EXH),
- le troisième champ caractéristique ($KF_3$) dépendant en plus du montant de la valeur de réglage (BPAPWH) de la pression de suralimentation.

**8.** Procédé selon la revendication 7, **caractérisé en ce que** la valeur de réglage (BPAPWH) de la pression de suralimentation est calculée à l'aide d'un quatrième champ caractéristique ($KF_4$) en fonction des grandeurs suivantes :

- le débit massique des gaz d'échappement (M_EXH),
- la pression des gaz d'échappement en amont de la turbine (PRS_EXH), et
- la température des gaz d'échappement (T_EXH),

ainsi que d'un rapport de pression de turbine (DIV_PRS_TUR) qui dépend du rendement isentropique déterminé de la turbine.

**9.** Procédé selon l'une des revendications 1 à 6, **caractérisé en ce que** la valeur de réglage (BPAPWH) de la pression de suralimentation est déterminée à l'aide d'un champ caractéristique ($KF_4$) en fonction du rapport de température sur la turbine (DIV_T_TUR) et des grandeurs suivantes :

- le débit massique des gaz d'échappement (M_EXH),
- la pression des gaz d'échappement en amont de la turbine (PRS_EXH), et
- la température des gaz d'échappement (T_EXH).

**10.** Procédé selon l'une des revendications 1 à 9, **caractérisé en ce que** la valeur de réglage (BPAPWH) de la pression de suralimentation agit sur une géométrie de turbine variable.

**11.** Procédé selon l'une des revendications 1 à 9, **caractérisé en ce que** la valeur de réglage (BPAPWH) de la pression de suralimentation agit sur une soupape de pression de suralimentation (WASTEGATE) disposée du côté des gaz d'échappement.

**12.** Procédé selon la revendication 11, **caractérisé en ce que** le débit massique sur la soupape de pression de suralimentation (M_WG) est formé par la différence entre le débit massique des gaz d'échappement (M_EXH) et un débit massique de turbine maximal (M_TUR_MAX).

## FIG 1

MODELL FÜR LUFT- UND ABGASPFAD (12)

AKTIVIERUNG (10)

VORSTEUERUNG VTG-MODELL (16)

SOLLWERT (14)

REGLER (18)

## FIG 2

VERDICHTER (20)

VERLUSTE (22)

TURBINE (24)

POW_CMP

POW_LOSS_TCHA

POW_TUR

BPAPWM VTG oder WG

# FIG 3

26

MAP

28

AMP

30

32

TIA → KF$_6$

MAF → ⊙

34

KF$_1$

KL$_1$

36

EFF_CMP

HEAT_CAPA_A

MAF

TIA

POW_CMP

38

T_UP_CMP

$$\frac{T\_UP\_CMP}{TIA} - 1$$

TIA

HEAT_CAPA_A

MAF

TIA

POW_CMP

# FIG 4

MAP_SP

40

AMP

42

MAF_SP → ⊙

TIA → KF$_6$

KL$_1$

KF$_1$

EFF_CMP

44

$$\frac{T\_UP\_CMP\_SP}{TIA} - 1$$

11

EP 1 299 628 B1

# FIG 5

POW_CMP ⟶ ⊕ ⟵ POW_LOSS_TCHA ⟵ [•] ⟵ ⊕ ⟵ EFF_LOSS_TCHA ⟵ [KL$_2$] ⟵ [÷] ⟵ N_TCHA ⟵ 64 ⟵ [KF$_2$] ⟵ [•] ⟵ MAF ⟵ [÷] ⟵ MAP

POW_TUR

$+$  $+$   $1$    $-$   $68$   $66$ — N_TCHA_NOM   [KF$_6$] ⟵ TIA

56  60  58  AMP  62

# FIG 6

TQ_CMP ⟶ ⊕ ⟵ TQ_LOSS_TCHA ⟵ [•] ⟵ ⊕ ⟵ EFF_LOSS_TCHA ⟵ [KL$_2$] ⟵ [÷] ⟵ N_TCHA ⟵ 70

TQ_TUR

$+$  $+$   $1$   $-$   N_TCHA_NOM

KL$_2$
EFF_LOSS_TCHA
[-]

N_TCHA/N_TCHA_NOM [%]

100

FIG 7

FIG 8